Europäisches Patentamt

European Patent Office

Office européen des brevets

(11) Numéro de publication: **0 332 511**
A1

# DEMANDE DE BREVET EUROPEEN

(21) Numéro de dépôt: **89400586.7**

(22) Date de dépôt: **02.03.89**

(51) Int. Cl.⁴: **A 01 K 17/00**
F 23 D 14/28

(30) Priorité: **11.03.88 FR 8803217**

(43) Date de publication de la demande:
**13.09.89 Bulletin 89/37**

(84) Etats contractants désignés:
**BE DE FR GB LU NL**

(71) Demandeur: **GUILBERT EXPRESS S.A.**
**10-12, rue Montlouis**
**F-75011 Paris (FR)**

(72) Inventeur: **Le Marchand, Alain**
**9, rue du Douaire**
**F-95570 Villaines sous Bois (FR)**

**Moumaneix, Francis**
**59, boulevard du Midi**
**F-93340 Le Raincy (FR)**

(74) Mandataire: **Netter, André et al**
**Cabinet NETTER 40, rue Vignon**
**F-75009 Paris (FR)**

(54) **Appareil chauffant par combustion de gaz.**

(57) Le dispositif comprend, alignés selon un axe (5), une poignée (1) contenant un réservoir de gaz (8), un robinet (2), un corps de production de flamme (3) et un embout (4) présentant une cuvette hémisphérique. Le corps (3) est fermé à l'avant par l'embout et à l'arrière, et présente dans sa paroi latérale (33) deux ouvertures (39) allongées selon l'axe (5) et occupant une faible largeur dans la direction circonférentielle, et garnies d'une grille à mailles fines (40).

FIG.1

EP 0 332 511 A1

Bundesdruckerei Berlin

## Description

## Appareil chauffant par combustion de gaz

L'invention concerne un appareil chauffant par combustion de gaz, en particulier pour brûler les cornes des animaux d'élevage.

Les cornes des animaux d'élevage à cornes tels que les bovins et les ovins sont brûlées périodiquement pour limiter leur croissance et éviter les accidents. On utilise à cet effet des appareils comprenant une poignée, une source de chaleur et un embout chauffé par celle-ci. L'embout présente une face en forme de cuvette sensiblement de révolution autour de l'axe de la poignée. Pour brûler une corne, on coiffe l'extrémité de celle-ci par l'embout de l'appareil, qu'on fait tourner sur lui-même en manoeuvrant la poignée.

Certains de ces appareils sont électriques et fonctionnent à la tension du secteur, par exemple 220 volts, la sécurité électrique étant assurée soit par une liaison à la terre, soit par une double isolation. Dans le premier cas il est nécessaire de disposer, à une distance raisonnable du lieu d'utilisation, d'une prise d'alimentation électrique avec liaison à la terre correcte, ce qui n'est pas toujours le cas dans les exploitations agricoles. De plus, le cordon d'alimentation de ces appareils étant relativement court, il est généralement nécessaire de faire appel à des prolongateurs qui doivent être munis d'un conducteur de terre. Lorsque toutes ces conditions sont réunies, existe encore le risque que les raccordements électriques se fassent en milieu humide et même dans l'eau. Enfin les mouvements des animaux risquent de provoquer un arrachement ou une rupture des fils.

On retrouve les mêmes contraintes et les mêmes dangers pour les appareils à double isolation, à l'exception de ceux résultant de la nécessité d'une liaison à la terre.

Pour ces raisons les organismes de normalisation européens prévoient d'interdire dans l'avenir la commercialisation de ces types d'appareils.

Il existe également des appareils électriques fonctionnant en basse tension (24 volts), nécessitant par conséquent un transformateur abaisseur de tension. Ici encore il est nécessaire de disposer d'une source d'alimentation électrique. Les problèmes de sécurité électrique sont résolus, à condition toutefois que le transformateur soit branché directement sur le secteur, sans jonction intermédiaire en milieu humide. Mais la présence du transformateur augmente sensiblement le coût du produit, d'autant plus que les organismes de normalisation exigent que le transformateur résiste aux projections d'eau.

Il existe enfin des appareils à gaz, qui sont à raccorder à une bouteille de gaz par l'intermédiaire d'un détendeur et d'un tuyau. Le lieu d'utilisation d'un tel appareil est indépendant de l'existence d'une source d'énergie fixe. Cependant il est nécessaire de disposer d'une bouteille de gaz et d'un détendeur qui, s'ils sont acquis spécialement pour cette application, augmentent le coût de l'équipement. De plus le poids de la bouteille limite la mobilité de celui-ci. L'appareil produit une flamme dont l'extrémité se projette à l'extérieur, et présente donc un risque d'incendie.

Le but de l'invention est d'éliminer les inconvénients des appareils connus et de procurer un appareil bon marché, autonome, d'une mobilité parfaite et éliminant pratiquement tout risque d'accident.

Un autre but de l'invention est de procurer un appareil chauffant par combustion de gaz d'une puissance et d'une température de fonctionnement relativement élevées et présentant un encombrement réduit, donc une bonne maniabilité, tout en évitant un échauffement excessif de la poignée.

L'invention a pour objet un appareil chauffant par combustion de gaz comprenant une poignée, un corps de combustion et un embout propre à être chauffé par la flamme de combustion, caractérisé en ce que le corps de combustion comporte une enveloppe extérieure munie de moyens empêchant toute sortie de flamme à l'extérieur du corps de combustion et limitant la pénétration de corps étrangers à l'intérieur de celui-ci.

Selon une caractéristique préférée, les moyens empêchant toute sortie de flamme et limitant la pénétration de corps étrangers comprennent une pluralité d'orifices dont les dimensions interdisent la pénétration d'une tige cylindrique de diamètre supérieur à 0,9 mm.

Dans un mode de réalisation, le corps de combustion comprend :
- un mélangeur;
- une structure tubulaire s'étendant axialement entre le mélangeur et l'embout et fixé solidement à ceux-ci, définissant en son intérieur une zone de flamme, la structure tubulaire étant ajourée avec un taux d'ouverture élevé; et
- une enveloppe extérieure ajourée avec un taux d'ouverture réduit, ladite enveloppe étant liée d'une part au mélangeur et d'autre part à la partie avant de la structure tubulaire.

Avantageusement, la structure tubulaire peut comporter un tube ajouré dont le taux d'ouverture est supérieur à 30%. Quant à l'enveloppe extérieure, elle peut comprendre une paroi tubulaire dans laquelle sont ménagées une ou plusieurs ouvertures munies de grille à mailles ou à perforations fines, ces ouvertures conférant à la paroi un taux d'ouverture inférieur à 15%. Il est en outre avantageux que ces ouvertures soient disposées sensiblement axialement en un petit nombre de zones circonférentielles et s'étendent au total sur une faible largeur dans la direction circonférentielle.

La paroi tubulaire du corps peut également présenter au moins un orifice d'allumage placé de préférence en amont des ouvertures précitées. Cet orifice peut être traversé par un rivet creux d'un diamètre intérieur supérieur à 2,5 millimètres, servant à fixer à la paroi une grille tubulaire fine.

De préférence, l'orifice d'allumage est disposé en amont de la zone de flamme.

L'invention prévoit également que la paroi tubulaire du corps, à l'une et/ou à l'autre de ses extrémités respectivement, comporte une partie rétreinte, ou est centrée par une cloison annulaire solidaire du mélangeur et de la struture tubulaire.

Avantageusement, la cloison annulaire comporte un rebord évasé de diamètre supérieur à celui de la paroi tubulaire, qui s'étend vers l'arrière au voisinage immédiat des ouvertures d'entrée d'air du mélangeur.

Selon un mode de réalisation de l'invention, la douille de la structure tubulaire est enfilée sur le mélangeur et s'étend au-delà de celui-ci vers l'aval, un compartiment annulaire étant ménagé entre le mélangeur et la douille en avant de leur zone de liaison, compartiment qui communique avec l'intérieur du mélangeur par des ouvertures latérales de celui-ci et qui est limité vers l'avant par une collerette s'étendant radialement vers l'extérieur à partir du mélangeur, cette collerette laissant subsister des passages de gaz vers l'avant à partir du compartiment annulaire.

Avantageusement, le dispositif comprend un injecteur et un filtre sous forme d'un cylindre poreux logé avec un jeu radial dans un alésage de l'injecteur et appliqué vers l'avant de façon étanche contre un épaulement de cet alésage par sertissage au moyen d'une lèvre déformée de l'injecteur.

Le dispositif peut également comprendre un pied s'étendant radialement à partir du corps et permettant de poser le dispositif dans une orientation oblique avec l'embout dirigé vers le haut.

Selon un autre aspect de l'invention, le corps de combustion comporte des moyens de barrage thermique s'opposant au transfert de chaleur par combustion entre l'embout et la poignée, ces moyens pouvant comprendre des gorges annulaires ménagées dans le mélangeur et réduisant localement la section transversale effective de celui-ci.

L'invention vise particulièrement un appareil consommant une puissance maximale P supérieure à 180 W, la température maximale de fonctionnement de l'embout étant supérieure à 400°C, et le rapport de la puissance P à la distance minimale L entre un point de la poignée et un point de l'embout étant supérieur à 1400 W/m, sans que la température superficielle de la poignée excède 45°C.

Plus particulièrement, la puissance P peut être supérieure à 250 W, et le rapport $\frac{P}{L}$ supérieur à 2000 W/m.

L'invention prévoit également que le rapport du diamètre du corps de combustion au diamètre de la poignée est compris entre 0,5 et 1,4. Lorsque le corps de combustion et/ou la poignée ne sont pas de révolution, cette relation s'applique à leur plus grande dimension transversale.

Selon une forme particulière de réalisation, un groupe intermédiaire, sur lequel est monté un bouton de commande d'alimentation en gaz, est interposé entre la poignée et le corps de combustion, et la poignée et le groupe intermédiaire sont réalisés au moins en partie en des matériaux s'opposant au transfert thermique par conduction entre le corps de combustion et la main d'un utilisateur tenant la poignée.

La poignée peut notamment être en métal revêtu d'un isolant thermique, par exemple d'une peinture époxy. De façon surprenante, une telle peinture procure, outre un effet esthétique agréable, une moindre sensation de chaleur, à température égale, que les revêtements isolants usuels.

L'invention prévoit également que le groupe intermédiaire, dans sa région adjacente au corps de combustion, est réalisé en acier allié contenant au moins 16% de chrome, et présente des évidements réduisant localement sa section transversale effective.

Selon une autre caractéristique de l'invention, le diamètre du groupe intermédiaire est sensiblement inférieur à ceux de la poignée et du corps de combustion, et le bouton de commande ne fait pas saillie au-delà d'une surface imaginaire joignant entre eux les contours des extrémités de la poignée et du corps de combustion tournées vers le groupe intermédiaire.

Selon un mode de réalisation de l'invention, la poignée, le groupe intermédiaire le cas échéant et le groupe de combustion sont sensiblement coaxiaux. Tel est le cas notamment dans un appareil pour brûler les cornes des animaux.

Selon une caractéristique avantageuse, la poignée est creuse et peut recevoir un réservoir interchangeable servant de source de gaz.

D'autres caractéristiques et avantages de l'invention ressortiront de la description détaillée ci-après d'un exemple de réalisation, et des dessins annexés dans lesquels :

- la figure 1 est une vue en élévation d'un appareil pour brûler les cornes selon l'invention, posé sur une surface horizontale;

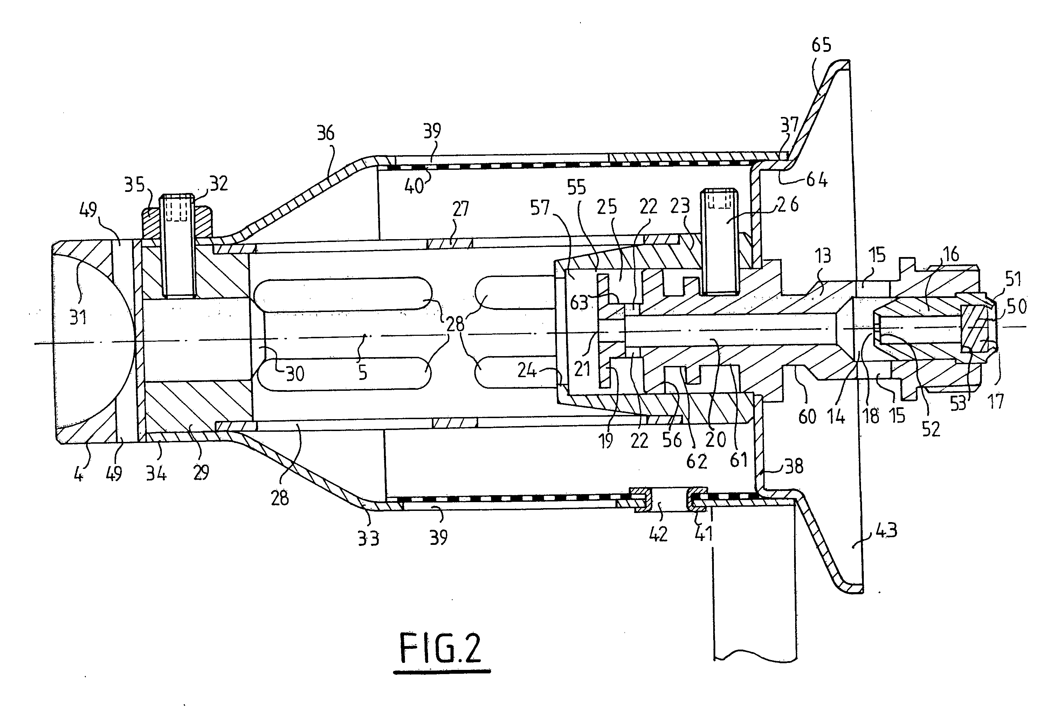

- la figure 2 est une vue en coupe axiale du corps de production de flamme et de l'embout de l'appareil de la figure 1; et

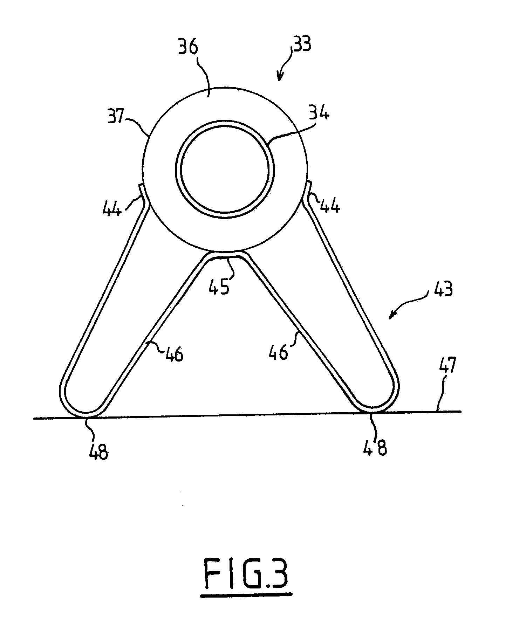

- la figure 3 est une vue en bout de l'enveloppe extérieure du corps de combustion et du pied.

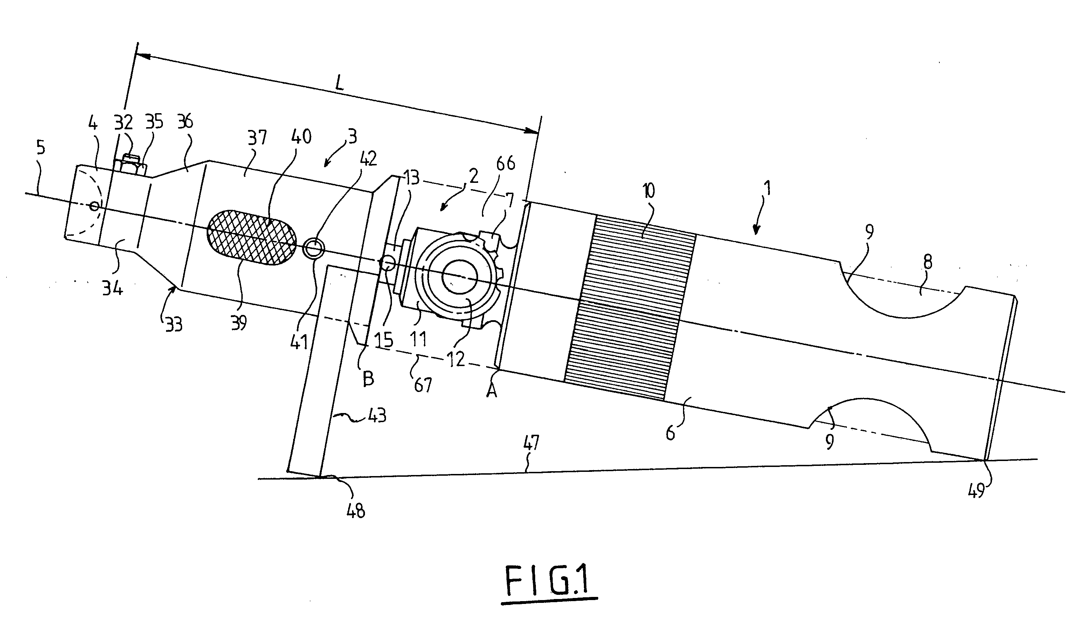

L'appareil représenté à la figure 1 comprend une poignée 1, un groupe intermédiaire formant robinet 2, un corps de combustion 3 et un embout 4, alignés dans cet ordre le long d'un axe 5, la poignée 1, le corps 3 et l'embout 4 étant sensiblement de révolution autour de cet axe. La poignée 1 comporte une paroi tubulaire 6 fermée à une de ses extrémités par un fond 7 sur lequel peut se visser une cartouche de gaz 8 entièrement contenue dans le tube 6. Ce dernier présente deux ouvertures 9 à travers lesquelles on peut manipuler la cartouche pour la visser et la dévisser. Le tube 6 présente par ailleurs sur une partie de sa longueur une zone striée longitudinalement 10 améliorant sa prise en main.

Le groupe intermédiaire 2 comprend un corps de robinet 11 également vissé sur le fond 7 de la poignée et muni de moyens non représentés pour ouvrir un clapet de sortie du gaz de la cartouche lorsque celle-ci est mise en place. Sur le corps de robinet est monté un volant de manoeuvre 12 permettant l'ouverture et la fermeture d'un passage de gaz et le réglage du débit.

Le groupe intermédiaire 2 comprend également la partie arrière d'un mélangeur tubulaire 13 en acier inoxydable allongé selon l'axe 5 et vissé à une extrémité sur le corps de robinet 11, et qui se prolonge à l'intérieur du corps de combustion 3. L'alésage axial 20 du mélangeur 13 comporte une portion d'entrée de diamètre accru 14 communiquant avec l'extérieur par des orifices d'entrée d'air 15 qui traversent la paroi du mélangeur 13. En arrière des orifices 15, la portion 14 reçoit un injecteur 16 en laiton qui porte à son extrémité arrière un filtre 17 interposé sur le trajet du gaz, l'extrémité avant de l'injecteur présentant un petit trou d'injection 18 pour le gaz ménagé dans une paroi transversale 52 de l'injecteur. Le filtre 17 sous forme d'un cylindre poreux est logé avec jeu radial dans une partie arrière élargie 50 de l'alésage axial de celui-ci, et appliqué vers l'avant contre un épaulement 53,limitant la partie 50,au moyen d'une lèvre de sertissage 51 prévue sur l'injecteur. Le jeu radial évite la formation par usure, lors de la mise en place du filtre, de particules susceptibles de boucher le trou d'injection. Les particules éventuellement présentes sont emprisonnées par le serrage du filtre contre l'épaulement 53. Immédiatement en avant de la portion 14 de l'alésage, le tube 13 présente sur sa face périphérique extérieure une gorge annulaire 60.

L'extrémité avant du mélangeur 13, à l'intérieur du corps de combustion 3, forme une collerette 19 dirigée radialement vers l'extérieur. L'alésage axial 20 du mélangeur débouche axialement en 21 en avant de la collerette 19, et radialement par des orifices 22 en arrière de celle-ci, dans une gorge annulaire 63. Une douille 23 en acier est enfilée sur le mélangeur 13, et se prolonge vers l'avant au-delà de son extrémité avant 21. Le diamètre extérieur du mélangeur 13 est légèrement inférieur au diamètre intérieur de la douille 23 au niveau de la collerette 19, sensiblement inférieur à ce même diamètre au niveau des ouvertures 22 et sensiblement égal au diamètre intérieur de la douille au niveau d'une collerette 56 limitant vers l'arrière la gorge 63. Le mélange gaz-air formé dans l'alésage 20 peut sortir de celui-ci par son extrémité avant 21 pour pénétrer dans un compartiment 57 situé entre la collerette 19 et l'extrémité avant 24 de la douille 23. Ce mélange peut également sortir de l'alésage 20 par les ouvertures radiales 22 pour pénétrer dans un compartiment annulaire 25 situé entre les collerettes 19 et 56. Les compartiments 25 et 57 communiquent entre eux par un intervalle annulaire d'accrochage de flamme 55 défini entre la périphérie de la collerette 19 et la douille 23. Cet intervalle annulaire pourrait être remplacé par des perforations traversant la collerette 19, laquelle pourrait par ailleurs être constituée par un disque indépendant fixé sur le mélangeur 13. La douille 23 est immobilisée sur le mélangeur 13 par une vis sans tête 26 vissée dans un trou radial de la douille et pénétrant dans une gorge annulaire 61 interposée entre deux collerettes du mélangeur.

A l'extérieur de la douille 23 est soudé par points un tube rigide 27 en acier doux, de révolution autour de l'axe 5 et s'étendant vers l'avant à partir de la douille, ce tube étant formé par une tôle perforée, enroulée et soudée par points bord à bord. Les perforations 28 du tube 27, allongées dans la direction axiale, représentent un taux d'ouverture de l'ordre de 40%.

Une bague 29 en acier, de révolution autour de l'axe 5, est soudée par points sur sa surface latérale extérieure à l'extrémité avant du tube 27. Dans l'alésage de cette bague est engagée une queue arrière 30 de l'embout 4 en matière conductrice de la chaleur, lequel présente vers l'avant une forme en cuvette sensiblement hémisphérique 31, dans laquelle débouche au moins un trou radial 49 servant à l'évacuation des fumées produites par le brûlage des cornes. L'embout est immobilisé de façon interchangeable par une vis sans tête 32 vissée dans un trou fileté radial de la bague 29 et dont l'extrémité s'appuie contre la queue 30. Cette dernière fait saillie vers l'arrière par rapport à la bague et est adjacente, en fonctionnement, à l'extrémité avant de la flamme produite par l'appareil, de façon à collecter la majeure partie de l'énergie de celle-ci. Le tube 27, la douille 23 et la bague 29 forment une structure tubulaire rigide solidarisant l'embout au mélangeur et par suite au groupe intermédiaire 2 et à la poignée 1.

Le corps 3 est limité latéralement par une virole en acier doux 33 dont une partie d'extrémité avant cylindrique 34 est enfilée sur l'extrémité avant du tube 27 et sur la bague 29. Cette partie 34 est traversée par la vis 32 et est serrée contre la bague par un écrou 35 vissé sur la vis 32 et servant également de frein pour celle-ci. A cette partie cylindrique 34 se raccordent vers l'arrière une partie tronconique 36, puis une autre partie cylindrique de plus grand diamètre 37 qui s'étend sur la majeure partie de la longueur du tube 27 et en arrière jusqu'au voisinage des ouvertures 15 d'entrée de l'air dans le mélangeur 13. Le corps de combustion est fermé à l'arrière par un disque 38 en acier doux présentant une ouverture axiale par laquelle il est enfilé sur le mélangeur 13 en étant emprisonné axialement entre une collerette arrière de ce dernier et l'extrémité arrière de la douille 23. Le disque 38 est logé à l'intérieur de la partie cylindrique 37 de la virole, au voisinage de l'extrémité arrière de celle-ci. A sa périphérie, il se prolonge vers l'arrière par un rebord cylindrique 64 sur lequel s'enfile l'extrémité arrière de la partie 37 dont le centrage est ainsi assuré. Au-delà de l'extrémité de la virole, le rebord 64 se raccorde à une partie évasée 65 de forme tronconique, dont le diamètre va en croisssant vers l'arrière à partir du diamètre maximal de la virole, et qui s'interrompt au droit des ouvertures d'entrée d'air 15.

La partie 37 de grand diamètre de la virole présente deux ouvertures 39 allongées dans la direction axiale et diamétralement opposées, dont la surface est petite par rapport à la surface totale de la virole, et notamment par rapport à la surface latérale de la chambre de combustion définie par la virole 33, la bague 29, la queue 30, le disque 38 et le mélangeur 13. Bien que les deux ouvertures diamétralement opposées semblent constituer une disposition optimale, il est possible de les remplacer par une seule ouverture allongée ou par un nombre d'ouvertures allongées supérieur à deux, ce nombre devant rester petit. Par ailleurs cette ouverture allongée ou ces ouvertures allongées peuvent être remplacées par une multiplicité d'ouvertures sensiblement alignées selon la direction axiale. En tout état de cause, la largeur totale occupée par les ouvertures dans la direction circonférentielle doit être faible par rapport à la circonférence de la partie 37. Cette dernière est doublée intérieurement par une grille tubulaire 40 dont l'extension longitudinale déborde de part et d'autre celle des ouvertures 39, et qui atteint en arrière le disque 38. La grille 40 est formée par un tamis de contour rectangulaire en acier inoxydable enroulé et soudé par points sur lui-même avec recouvrement. La partie 37 et la grille 40 présentent respectivement deux orifices situés en regard l'un de l'autre et en regard du mélangeur 13, donc en arrière de l'extrémité 24 de la douille 23, et dans lesquels passe un rivet creux 41, qui assure la solidarisation des deux pièces. On évite ainsi les difficultés liées au soudage de pièces d'épaisseurs différentes. L'intérieur du rivet creux 41 fournit un passage 42 entre la chambre de combustion et l'extérieur de l'appareil. La section de ce passage doit être d'au moins 12 mm² pour une puissance consommée supérieure à 250 W.

Au corps 3 est associé un pied 43 formé par une bande de tôle soudée par ses deux extrémités 44 et par sa région médiane 45 en trois endroits de la circonférence de la partie 37 de la virole 33, à l'extrémité arrière de celle-ci. Entre la région 45 et chacune des extrémités 44, la bande forme un méandre en forme de U 46 dirigé radialement vers l'extérieur et s'étendant jusqu'à une distance de l'axe 5 supérieure au rayon extérieur de la poignée 1. Le dispositif peut ainsi reposer de façon stable sur une surface horizontale 47 par deux points d'appui 48 fournis respectivement par les deux méandres 46 et par un troisième point 49 fourni par l'extrémité arrière de la poignée 1. Dans cette position l'embout 4 est orienté obliquement vers le haut.

Le pied soudé peut être remplacé par un pied amovible ou repliable. Au lieu d'un pied fixé au corps on peut prévoir un support solidaire d'une surface réceptrice appartenant par exemple à une mallette métallique servant également au transport du dispositif. On évite ainsi que le dispositif soit posé directement sur un support inflammable tel que de la paille.

Les avantages résultant de la configuration particulière du dispositif décrit ressortent de son fonctionnement exposé ci-après.

Initialement le dispositif est orienté avec le corps 3 plus haut que la poignée 1, par exemple dans la position représentée à la figure 1. Après ouverture du robinet 2, du gaz sec (en raison de l'orientation qui vient d'être définie) est injecté par le trou 18 dans l'alésage 20 du mélangeur 13 et entraîne de l'air dit primaire introduit par les ouvertures 15, auquel il se mélange de façon homogène. Le mélange arrive dans la chambre interne du corps 3, ou chambre de combustion, par les passages 21, 22, 55 et 24. La région annulaire de la chambre entourant la douille 23 est une zone calme qui permet l'allumage facile du mélange gazeux par une flamme extérieure présentée devant l'orifice 42. Une flamme axiale se forme alors entre le brûleur 13, 23 d'une part et la queue 30 de l'embout 4 d'autre part, provoquant l'échauffement de l'embout. Après quelques dizaines de secondes de combustion, la chaleur transmise de l'embout au brûleur par l'intermédiaire de la bague 29 et du tube 27 est suffisante pour porter l'injecteur 16 à une température telle que l'embout puisse être orienté vers le bas, le gaz liquéfié contenu dans la cartouche 8 et tombant par gravité étant vaporisé en passant dans le filtre métallique 17 avant de franchir le trou d'injection 18 et ne perturbant donc pas la flamme. Une remontée de chaleur excessive est cependant évitée par le fait que le tube 27, qui est soudé à la bague 29 et à la douille 23, donc en liaison conductrice de la chaleur avec celles-ci, est lui-même peu conducteur de la chaleur grâce à la surface importante occupée par ses ouvertures 28, et grâce aux réductions localisées de la section transversale effective du tube mélangeur 13 réalisées par la gorge 63, les orifices 22, la gorge 61, une gorge annulaire 62 disposée entre les gorges 61 et 63, ainsi que la gorge 60 et les ouvertures d'entrée d'air 15. Quant à la virole 33, qui présente en elle-même une conductibilité thermique relativement élevée en raison de la faible surface occupée par ses ouvertures 39, son contact thermique avec la bague 29 est médiocre et elle n'est en relation avec le brûleur que par l'intermédiaire du disque 38, auquel elle n'est pas positivement solidarisée. Cette virole ne contribue donc que très faiblement à la transmission de chaleur de l'embout au brûleur.

Le disque 38 assure la fermeture de la chambre de combustion vers l'arrière de façon non étanche mais néanmoins suffisante pour interdire pratiquement aux gaz brûlés, dans la position normale de fonctionnement embout vers le bas, de s'approcher des ouvertures d'entrée d'air 15 et d'y être aspirés. La portion évasée 65 formée d'une seule pièce avec le disque 38 éloigne encore davantage les gaz brûlés des ouvertures 15. Quant à la disposition des ouvertures 39 en deux zones circonférentielles étroites diamétralement opposées, elle évite la formation d'une colonne tubulaire ascendante de gaz brûlés qui barrerait l'accès de l'air frais aux ouvertures 15.

La grille 40 a des ouvertures en forme de losanges à angles de 60° dont les côtés parallèles sont écartés de 0,9 mm. Elle empêche donc la pénétration d'une tige cylindrique d'un diamètre supérieur à 0,9 mm. Ceci limite les risques de pénétration de particules inflammables, notamment de brins de paille, dans la chambre de combustion. Par ailleurs, des ouvertures aussi petites empêchent pratiquement toute sortie de flamme même en cas de vent. Bien entendu les mêmes résultats pourraient être obtenus en remplaçant ces ouvertures de grille par des ouvertures en forme de fentes allongées selon l'axe du corps de combustion et d'une largeur ne dépassant pas 0,9 mm, de telles fentes pouvant être ménagées directement dans la virole 33 au lieu des ouvertures relativement larges 39.

L'orifice 42 ne permet pas non plus la sortie de flamme, car il est disposé en regard de la douille 23, donc en arrière de la zone de flamme. Cette disposition limite le risque d'introduction jusqu'à la zone de flamme d'un brin de paille.

Outre les avantages déjà exposés, l'appareil décrit permet une dissipation de puissance thermique élevée pour un encombrement réduit, sans échauffement excessif de la surface de la poignée en contact avec l'opérateur.

En effet cet appareil consomme une puissance P de 500 à 700 W selon ses conditions d'utilisation, et la distance L séparant l'extrémité arrière de l'embout 4, porté à une température d'environ 600°C, de l'extrémité avant de la poignée n'est que de 0,125 m. Le rapport $\frac{P}{L}$ est donc de 4000 à 5600 W/m. Malgré cela la surface de la poignée 1 n'est porté qu'à une température de 37°C environ, qui ne nuit pas au confort de l'utilisateur.

La faible valeur de la distance L permet une excellent maniabilité de l'appareil, inconnue des appareils similaires existants auparavant. A cette maniabilité contribue également un rapport approprié entre le diamètre du corps de combustion (abstraction faite de la partie évasée 65 qui n'occupe qu'une faible longueur) et le diamètre de la poignée 1, qui est ici de 0,75 environ.

On peut également remarquer que le diamètre du corps de robinet 11 est sensiblement inférieur à ceux de la poignée 1 et du corps de combustion 3, ce qui dégage un espace annulaire 66 autour du groupe intermédiaire 2 à l'intérieur de la surface imaginaire 67, ici de révolution, joignant l'extrémité avant A de la poignée et l'extrémité arrière B du corps de combustion. Le bouton de commande 12 est logé à l'intérieur de cet espace annulaire 66 et est ainsi protégé en cas de chute de l'appareil par exemple.

La poignée 1 est en métal et est revêtue extérieurement, dans sa partie tubulaire 6, d'une peinture époxy cuite au four. Cette peinture procure une isolation thermique supplémentaire et donne une sensation de confort remarquable.

L'invention n'est pas limitée aux appareils pour brûler les cornes des animaux. D'autres exemples d'application sont les appareils pour marquer les animaux, et plus généralement les appareils à marquer à chaud, et les fers à souder.

En fonction de l'application, la poignée et le corps de combustion peuvent n'être pas alignés selon un même axe. D'autre part la poignée n'est pas nécessairement de révolution, et ne reçoit pas nécessairement un réservoir de gaz interchangeable.

## Revendications

1. Appareil chauffant par combustion de gaz comprenant une poignée (1), un corps de combustion (3) et un embout (4) propre à être chauffé par la flamme de combustion, caractérisé en ce que le corps de combustion comporte une enveloppe extérieure (33,38) munie de moyens empêchant toute sortie de flamme à l'extérieur du corps de combustion et limitant la pénétration de corps étrangers à l'intérieur de celui-ci.

2. Appareil selon la revendication 1, caractérisé en ce que lesdits moyens comprennent une pluralité d'orifices dont les dimensions interdisent la pénétration d'une tige cylindrique de diamètre supérieur à 0,9 mm.

3. Appareil selon l'une des revendications 1 et 2, caractérisé en ce que le corps de combustion comprend :
- un mélangeur (13);
- une structure tubulaire (23,27,29) s'étendant axialement entre le mélangeur et l'embout et fixé solidement à ceux-ci, définissant en son intérieur une zone de flamme, la structure tubulaire étant ajourée avec un taux d'ouverture élevé, et
une enveloppe extérieure (33,38) ajourée avec un taux d'ouverture réduit, ladite enveloppe étant liée d'une part au mélangeur et d'autre part à la partie avant de la structure tubulaire.

4. Appareil selon la revendication 3, caractérisé en ce que la structure tubulaire (23, 27, 29) comporte un tube ajouré (27) dont le taux d'ouverture est supérieur à 30%.

5. Appareil selon la revendication 4, caractérisé en ce que le tube ajouré (27) est soudé à ses deux extrémités respectivement à une douille (23) fixée au mélangeur et une bague (29) recevant l'embout (4).

6. Appareil selon l'une des revendications 3 à 5, caractérisé en ce que l'enveloppe extérieure (33,38) comprend une paroi tubulaire (33) dans laquelle sont ménagées une ou plusieurs ouvertures (39) munies de grilles à mailles ou à perforations fines, lesdites ouvertures conférant à la paroi (33) un taux d'ouverture inférieur à 15%.

7. Appareil selon la revendication 6, caractérisé en ce que les ouvertures (39) de la paroi tubulaire sont disposées sensiblement axialement en un petit nombre de zones circonférentielles et s'étendent au total sur une faible largeur dans la direction circonférentielle.

8. Appareil selon l'une des revendications 6 et 7, caractérisé en ce que la paroi tubulaire (33) présente au moins un orifice d'allumage (42).

9. Appareil selon la revendication 8, caractérisé en ce que l'orifice d'allumage (42) est placé en amont de la ou des ouvertures de la paroi tubulaire (33).

10. Appareil selon l'une des revendications 8 et 9, caractérisé en ce que l'orifice (42) est muni d'un rivet creux (41) servant à fixer à la paroi tubulaire une grille tubulaire fine (40) garnissant les ouvertures de celle-ci, le diamètre intérieur du rivet étant supérieur à 2,5 millimètres.

11. Appareil selon l'une des revendications 8 à 10, caractérisé en ce que l'orifice d'allumage est disposé en amont de la zone de flamme.

12. Appareil selon l'une des revendications 6 à 11, caractérisé en ce que la paroi tubulaire (33) comporte à une extrémité une partie rétreinte (34,36).

13. Appareil selon l'une des revendications 6 à 12, caractérisé en ce que la paroi tubulaire (33) est centrée, à une extrémité, par une cloison annulaire (38) solidaire du mélangeur (13) et de la structure tubulaire.

14. Appareil selon la revendication 13, caractérisé en ce que la cloison annulaire (38) est située à l'arrière et entoure le mélangeur en avant d'ouvertures d'entrée d'air (15).

15. Appareil selon la revendication 14, caractérisé en ce que la cloison annulaire (38) comporte un rebord évasé de diamètre supérieur à celui de la paroi tubulaire (33), qui s'étend vers l'arrière au voisinage immédiat des ouvertures d'entrée d'air (15).

16. Appareil selon l'une des revendications 5 à 15, caractérisé en ce que la douille (23) est enfilée sur le mélangeur et s'étend au-delà de celui-ci vers l'aval, un compartiment annulaire étant ménagé entre le mélangeur et la douille en avant de leur zone de liaison, compartiment qui communique avec l'intérieur du mélangeur par des ouvertures latérales (22) de celui-ci et qui est limité vers l'avant par une collerette (19) s'étendant radialement vers l'extérieur à partir du mélangeur, cette collerette laissant subsister des passages de gaz vers l'avant à partir du compartiment annulaire.

17. Appareil selon l'une des revendications précédentes, caractérisé en ce que le corps de combustion comporte des moyens de barrage thermique (22,61,62,63) s'opposant au transfert de chaleur par conduction entre l'embout (4) et la poignée (1).

18. Appareil selon la revendication 3 et la revendication 17, caractérisé en ce que les moyens de barrage thermique comprennent des gorges annulaires (61,62,63) ménagées dans le mélangeur (13) et réduisant localement la section transversale effective de celui-ci.

19. Appareil selon l'une des revendications précédentes, caractérisé en ce que sa puissance maximale consommée P est supérieure à 180 W, que la température maximale de fonctionnement de l'embout est supérieure à 400°C et que le rapport de la puissance P à la distance minimale L entre un point de la poignée et un point de l'embout est supérieur à 1400 W/m, la température superficielle de la poignée n'excédant pas 45°C.

20. Appareil selon la revendication 19, caractérisé en ce que la puissance P est supérieure à 250 W et que le rapport $\frac{P}{L}$ est supérieur à 2000 W/m.

21. Appareil selon l'une des revendications précédentes, caractérisé en ce que le rapport du diamètre ou de la plus grande dimension transversale du corps de combustion au diamètre ou à la plus grande dimension transversale de la poignée est compris entre 0,5 et 1,4.

22. Appareil selon l'une des revendications précédentes, caractérisé en ce qu'un groupe intermédiaire (2), sur lequel est monté un bouton de commande d'alimentation en gaz (12), est interposé entre la poignée (1) et le corps de combustion (3) et en ce que la poignée et le groupe intermédiaire sont réalisés au moins en partie en des matériaux s'opposant au transfert thermique par conduction entre le corps de combustion (3) et la main d'un utilisateur tenant la poignée.

23. Appareil selon la revendication 22, caractérisé en ce que la poignée est en métal revêtu d'un isolant thermique.

24. Appareil selon la revendication 23, caractérisé en ce que le revêtement de la poignée est une peinture époxy.

25. Appareil selon l'une des revendications 22 à 24, caractérisé en ce que le groupe intermédiaire, dans sa région adjacente au corps de combustion, est réalisé en acier allié contenant au moins 16% de chrome, et présente des évidements (15,60) réduisant localement sa section transversale effective.

26. Appareil selon l'une des revendications 22 à 25, caractérisé en ce que le diamètre ou la plus grande dimension transversale du groupe intermédiaire (2) est sensiblement inférieur à ceux de la poignée (1) et du corps de combustion (3) et en ce que le bouton de commande (12) ne fait pas saillie au-delà d'une surface imaginaire joignant entre eux les contours des extrémités de la poignée et du corps de combustion tournées vers le groupe intermédiaire.

27. Appareil selon l'une des revendications précédentes, caractérisé en ce que la poignée, le groupe intermédiaire le cas échéant, et le corps de combustion sont sensiblement coaxiaux.

28. Appareil pour brûler les cornes des animaux selon la revendication 27.

29. Appareil selon l'une des revendications précédentes, caractérisé en ce que la poignée (1) est creuse et peut recevoir un réservoir interchangeable (18) servant de source de gaz.

FIG.1

EP 0 332 511 A1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | WO-A-8707549 (SIM)<br>* page 1, ligne 9 - ligne 15 *<br>* page 2, ligne 32 - ligne 35 *<br>* page 14, ligne 10 - ligne 15; revendication 1; figures 1, 2, 7 *<br>--- | 1-3 | A01K17/00<br>F23D14/28 |
| X | GB-A-1524185 (S. MECHELE LIMITED)<br>* page 1, ligne 38 - ligne 51; figures 1, 2 * | 1-3 | |
| A | --- | 6 | |
| A | US-A-3905755 (ASKE)<br>--- | | |
| A | FR-A-1114012 (FOSSE)<br>--- | | |
| A | FR-A-2398965 (ANC. ETS LEON GUILBERT ET FILS)<br>----- | | |

**DOMAINES TECHNIQUES RECHERCHES (Int. Cl.4 )**

A01K
F24C
F23D

Le présent rapport a été établi pour toutes les revendications

| Lieu de la recherche | Date d'achèvement de la recherche | Examinateur |
|---|---|---|
| LA HAYE | 09 JUIN 1989 | VON ARX V.U. |

CATEGORIE DES DOCUMENTS CITES

X : particulièrement pertinent à lui seul
V : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)